# EUROPEAN PATENT SPECIFICATION

(11) **EP 3 318 369 B1**
(45) Date of publication and mention of the grant of the patent: **07.06.2023**
(21) Application number: 16306465.2
(22) Date of filing: 08.11.2016
(51) Int. Cl.: B25J 9/00, B25J 19/00

(54) **CABLE-DRIVEN PARALLEL MANIPULATOR**
KABELBETRIEBENER PARALLELMANIPULATOR
MANIPULATEUR PARALLÈLE COMMANDÉ PAR CÂBLE

(43) Date of publication of application: 09.05.2018
(73) Proprietor: CENTRE NATIONAL DE LA RECHERCHE SCIENTIFIQUE, 75794 Paris Cedex 16 (FR); UNIVERSITE DE MONTPELLIER, 34090 Montpellier (FR); Tecnalia France, 34090 Montpellier (FR)
(72) Inventor: IZARD, Jean-Baptiste, 34090 MONTPELLIER (FR); GOUTTEFARDE, Marc, 75794 PARIS CEDEX 14 (FR)
(74) Representative: Balder IP Law, S.L.

(56) References cited:
- JP-A- S60 138 458
- US-A- 5 653 350
- US-A1- 2008 054 836
- US-A1- 2011 071 677
- BOSTELMAN R V ET AL: "Stability of an underwater work platform suspended from an unstable reference", OCEANS '93. ENGINEERING IN HARMONY WITH OCEAN. PROCEEDINGS VICTORIA, BC, CANADA 18-21 OCT. 1993, NEW YORK, NY, USA,IEEE, 18 October 1993 (1993-10-18), pages II321-II325, XP010117464, DOI: 10.1109/OCEANS.1993.326114 ISBN: 978-0-7803-1385-9
- EL-GHAZALY GAMAL ET AL: "Maximum wrench feasible payload in cable-driven parallel robots equipped with a serial robot", 2016 IEEE INTERNATIONAL CONFERENCE ON ADVANCED INTELLIGENT MECHATRONICS (AIM), IEEE, 12 July 2016 (2016-07-12), pages 1572-1578, XP032972089, DOI: 10.1109/AIM.2016.7576994 [retrieved on 2016-09-26]

## Description

### TECHNICAL FIELD

The present invention is related to the field of manipulators, and more particularly, cable-driven parallel manipulators comprising a plurality of elongated and flexible traction elements, generically referred to as "cables" in the present document.

### STATE OF THE ART

In the present text, the term "cable" is used to encompass any kind of flexible traction element that can be used in the context of the present invention, for example, cables, tendons, ropes, wires, strings, chains, belts, etc.

Cable-driven parallel manipulators are a particular type of parallel-link manipulators in which the rigid links are replaced by cables. Several cables of varying lengths connect a usually mobile object, here called the mobile platform or load, to a generally stationary one, here referred to as the base support.

As it is well-known in the state of the art (for example, cf. P. Bosscher et al., Wrench-feasible workspace generation for cable-driven robots, IEEE Trans. on Robotics, 22(5):890-902, 2006; M. Gouttefarde et al., Interval-analysis-based determination of the wrench-feasible workspace of parallel cable-driven robots, IEEE Trans. on Robotics, 27(1):1-13, 2011) within the so-called wrench-feasible workspace of the manipulator, appropriate control of the cable lengths and/or tensions allows the load to be positioned and oriented (as desired within known limits) and/or forces and moments (i.e. wrenches) at the load to be balanced, while keeping the cable tensions within prescribed bounds. (In mechanics, a wrench is a force and moment system in which the force and the moment are parallel. Every system of forces and moments can be reduced to a wrench. Note that "torque" and "couple" are synonyms of "moment"). These bounds on the cable tensions consist of a minimum admissible tension and a maximum admissible tension. The tension in each cable of the cable-driven parallel manipulator shall be, on the one hand, larger than the minimum admissible tension and, on the other hand, smaller than the maximum admissible tension. If this constraint on the cable tensions is not satisfied, the safety and proper operation of the manipulator may be compromised. In fact, the minimum admissible tension is set to a non-negative value which represents the fact that each cable can pull, but not push (a negative cable tension would mean that the cable is pushing). The maximum admissible tensions are set by the maximum admissible stress in mechanical parts, e.g. in the cables or in routing pulleys, or by the maximum torques of the manipulator actuators.

Methods and means well known in the art permit the automatic or manual control of all the desired degrees of freedom of the load in various settings, including decentralized model-based control and sensor-based control, implemented by way of various types of controller (PID, adaptive, robust, ...) and sensors (encoders, force sensors, ...). As it is also well-known in the current art, various methods and means exist to pay out and take up cables and/or to keep the cables tensed, to route a cable from a winch to the element (eyelet, swiveling pulley, etc.) from which it extends toward the load, to select suitable cable attachments onto the load, to measure the cable tensions, and to actuate crane trolleys which may be used in conjunction with a cable-driven parallel manipulator.

Cable-driven parallel manipulators possess a number of advantageous characteristics including modularity, scalability, re-configurability, and the ability to cover a large dimension workspace (typically up to several tens of meters) and to handle heavy loads (typically, several hundreds of kilograms). Thus, their use in industrial applications involving very large dimensions (10 to 100 m) and/or heavy loads (100 to 1000 kg) may be relevant and there are numerous potential applications of cable-driven parallel manipulators, including applications where controlling and/or constraining the possible motions of a load/tool is needed. They compete mostly with lifting equipment on this specific field of application, providing the advantage of suppressing sway and resisting to solicitations in all direction of forces and moments, and thus the possibility of being operated autonomously as a proper robot.

Examples of large-dimension applications are construction, maintenance and/or dismantling of large metallic structures, airplanes, ships, buildings, dams, or (nuclear) power plants. Currently, most of these applications are labor-intensive and involve many different tasks. If they need to be accomplished by a robotic system, a robust combination of capabilities in motion, dexterity and direct physical interaction with the environment around the robot is required.

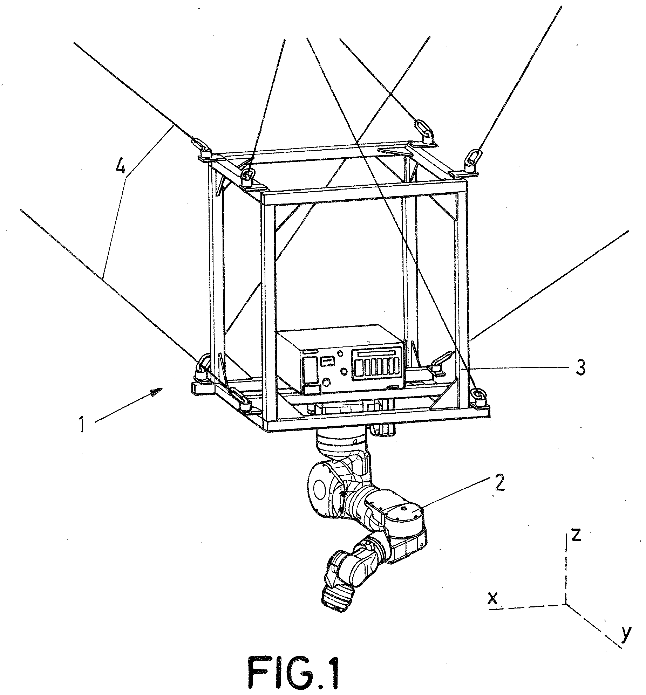

Hence, if cable-driven parallel manipulators are to be used in such applications, they may have to be equipped with on-board devices that provide the required local dexterity. The fact that they can be equipped with such devices is one major difference with standard lifting systems, which swaying behavior does not allow this use, and therefore a major differentiating point for cable-driven parallel manipulators in the lifting industry. This leads to a mobile manipulator system like the one shown in Figure 1, which consists of a cable-driven parallel manipulator 1 carrying a conventional robotic arm 2 mounted on its mobile platform 3. This idea of mounting an active mechanical device on the mobile platform of a cable-driven parallel manipulator is known, as shown for example in US patents No. 4666362 and 6566834. However, in these examples of robotic arms operating on-board a mobile platform of a cable-driven parallel manipulator, the robotic arm is a small arm (with respect to the platform), it does not move, or it moves slowly, and there is no mechanical interaction or contact between the arm end-effector and its environment. Then, the forces and moments generated by the small robotic arm, if any, on the mobile platform of the cable-driven parallel manipulator, remain small enough for their action to be considered negligible. Consequently, the statics and dynamics of the cable-driven parallel manipulator are not substantially disturbed by the on-board robotic arm, thereby preserving its nominal operation conditions.

Patent document US 4710819 describes a suspension system for supporting and conveying equipment, such as a camera. The equipment support member (the mobile platform) is suspended by flexible elements, e.g. cables, so as to possess three translational degrees of freedom. In addition, the equipment support member contains means that allow the conveyed equipment and the equipment support member to be rotatable relative to each other (for instance, by means of a gimbal). The purpose of this relative rotation is to controllably isolate the conveyed equipment from the angular movement of the equipment support member, in particular to keep the conveyed equipment perpendicular to the earth. The conveyed equipment may have its own means of changing and controlling its orientation. The active devices on-board the mobile platform (equipment support member) are used to keep the orientation of the conveyed equipment independent of the orientation of the mobile platform. The motions of the movable elements on-board the mobile platform are a consequence of a change of orientation of the mobile platform.

Patent document US 4883184 relates to a stabilized load lifting device consisting of a load platform (mobile platform) suspended from a carriage by three pairs of cables. All the six cable lengths are adjusted by one unique winch in order to lower or raise the load platform so that the cable lengths are not independently controlled. It is possible to modify the position and orientation of the carried load relative to the mobile platform so as to modify the location of the center of mass of the carried load with respect to the mobile platform.

As already pointed above, the cable tensions shall remain within prescribed admissible bounds (minimum and maximum admissible tensions) to ensure safety and a proper functioning of the cable-driven parallel manipulator. As well-known in the art, this constraint on the cable tensions yields a bounded set of mobile platform wrenches (forces and moments) that the cables can balance with tensions remaining within the prescribed admissible bounds, i.e. with admissible cable tensions. In the sequel, this bounded set of mobile platform wrenches is referred to as the *feasible wrench set* and a platform wrench lying inside this set is referred to as a *feasible wrench.* In existing cable-driven parallel manipulators, for given minimum and maximum admissible cable tensions, the feasible wrench set is only altered by the pose (position and orientation) of the mobile platform since it depends on the configuration of the cables around the platform. Hence, for a given mobile platform pose, if a specific platform wrench is outside of the feasible wrench set, this wrench cannot be produced by the cables with admissible cable tensions. This wrench infeasibility is often a significant issue, notably when operating a mechanical manipulator on-board the cable-driven manipulator mobile platform. Indeed, for typically stretched-out postures of the on-board manipulator, the moments applied onto the mobile platform can lead to wrenches outside of the feasible wrench set. Such postures, though potentially useful, can then not be authorized without compromising the safety and proper functioning of the machine. The same issue may arise when dealing with picking and placing a heavy load with a cable-driven parallel manipulator. In some cases the load needs to be picked with an offset distance, or on the sides of the platform, or needs to be inclined from the vertical position, leading to possibly off-centered gravity loads that generate a moment. In the current state of art, the only way to modify the feasible wrench set with the objective of making the required wrench feasible is to change the pose of the cable-driven parallel manipulator, or to consequently increase the weight on board the cable-driven parallel manipulator in order to avoid low tension in the cables. However, the size and shape of the feasible wrench set change significantly only if the mobile platform pose is substantially modified which is most of the time not permitted by the task to be accomplished; on the other hand, oversizing the embarked weight cannot solve the issue in some complex positions, while being widely inappropriate in terms of power and size versus the task at hand.

In general terms, the wrench resulting from a load and its picking position on the mobile platform may prove to be out of the feasible wrench set for a given design of cable-driven parallel manipulator. Hence, when dealing solely with the cable tensions within the prescribed bounds, nothing can be done to make the required wrench feasible: usable postures of the on-board mechanical manipulator shall be (strongly) restricted, picking and placing scenarios need to be redefined, or the platform needs to be further loaded with inert weight, leading to an oversized platform with respect to the task at hand.

Therefore, there is a need for cable-driven parallel manipulators with increased capabilities going beyond current nominal physical constraints, e.g., to be capable of handling (translating, rotating, securing, etc.) heavy and large objects or capable of balancing the increased wrenches demanded by, for instance, an on-board mechanical manipulator.

The U.S. patent publication US-2008/054836 A1 describes a reeving system for filming movies, sporting events, or any other activity that requires fluid movement of a camera or other object to any position within a defined volume of space, wherein an object is moved throughout three-dimensional space by relocating one or more lines that are feed through a plurality of opposing sides of the object.

### DESCRIPTION OF THE INVENTION

The invention provides a cable-driven parallel manipulator which includes means for an active control of the location and of the motion of the overall center of mass (also referred to as overall CoM in the present document) by actively controlling the locations and the motions of the centers of mass of the specific elements of the cable-driven parallel manipulator. This additional means for an active control of the overall CoM comprises one or several movable devices placed on-board the mobile platform of the cable-driven parallel manipulator, whose positions are computer-controlled so as to position the overall center of mass into a suitable region of space.

So the present invention relates to a cable-driven parallel manipulator which comprises:
- a support structure;
- a cable system mounted on the support structure;
- a mobile platform connected to the cable system, whereto the load is attachable;
- the cable system being controlled by a control unit to position and orientate the mobile platform and/or to apply forces and/or moments (i.e. wrenches) on the mobile platform;
- at least one movable device mounted on the mobile platform; and,
- a control module configured to generate an instruction to move the movable device for displacing an overall CoM of the cable-driven parallel manipulator, such that, upon moving the movable device, the overall CoM stays inside a predetermined region, which is the CoM feasible region; the overall CoM of the cable-driven parallel manipulator is computed as the center of mass of all of: the mobile platform (including all components fixed to it such as sensors, fixtures, etc.), the at least one movable device and the load.

This control of the position of the overall CoM plays a fundamental role in keeping cable tensions into prescribed admissible bounds. Indeed, 3^{rd} Newton's law applied at the level of the mobile platform states that the tensions from the cable need to balance the effect of any external wrench on the one hand, and of gravity on the other hand. As explained in the previous section, in the state of the art the only variable that can be changed is the tension in the cables. External, dynamics-induced or task-related wrenches are set by the requirements. Gravity acts on the weight of the mobile platform, the load and any other device on-board the mobile platform: this is a force located at the overall CoM and the moment of this force is dependent on the overall CoM location. Hence, the gravity wrench depends on the overall mass and the position of the overall CoM. The control of the position of the overall CoM by instructing the at least one movable device to move thus increases the wrench capabilities of the cable-driven parallel manipulator and, thereby, increase its capabilities of handling heavy loads and/or of tolerating large ranges of possible postures of a mechanical manipulator placed on-board its mobile platform beyond the capabilities of state of art cable-driven parallel manipulators. For a given overall mass, the set of locations of the overall CoM which corresponds to feasible wrenches (i.e. to admissible cable tensions) for a fixed external wrench form a bounded region space. In the present document, this predetermined region of space is referred to as the *CoM feasible region.* The weight of system composed of the mobile platform, the load, and any other devices placed on-board the mobile platform generates a wrench which, combined with the external forces is feasible (i.e. can be counteracted by the sum of forces from the cables within admissible values) if and only if the overall CoM lies inside the CoM feasible region.

The instruction to move is preferably triggered to compensate for some unbalance at the mobile platform. This unbalance may be interpreted by having an external wrench acting on the mobile platform that when summed up with gravity wrench results in an overall wrench that is outside the feasible wrench set (which is the set of wrenches for which there is at least one set of cable forces to compensate this wrench without a cable going slack or exceeding its maximum tension). This unbalance may be due to several causes, such as displacement of the mobile platform, handling of the load, external action (such as wind), etc. and this unbalance can either be directly or indirectly measured (using sensors such as accelerometers, force sensors, etc.), or it can be anticipated and decided by means of a model and planning strategy of the whole cable-driven parallel manipulator. In the specific case of quasi-static operation, only gravity, applied at the overall CoM, applies: unbalance is understood as the overall CoM being outside or having the tendency to leave the CoM feasible region where the cable tensions are admissible, said region being linked to the feasible wrench set.

The at least one movable device is thus used to balance or modify the forces and moments (wrenches) due to the statics and dynamics of the mobile platform and its load, and external forces and moments on either of those, in order to keep the cable tensions within admissible bounds. Thereby, the use of at least one movable device mounted on the mobile platform of the cable-driven parallel manipulator increases the load capabilities and the usable volume of the workspace of the manipulator.

Moreover, the cable-driven parallel manipulator as just defined, which provides control over the overall CoM by means of the at least one movable device, enables the use of a high dexterity and small workspace system (such as a robotic arm) within a large workspace provided by a low dexterity system (the cable-driven parallel manipulator), thereby maximizing the possible postures and motions of the high dexterity and small workspace system. Indeed, the high dexterity system being placed on-board the cable-driven parallel manipulator mobile platform, the control over the overall CoM allows the cables to keep admissible tensions for a significantly larger set of possible postures and motions of the high dexterity system. This way, the operational capabilities of the cable-driven parallel manipulator can be expanded towards more complex tasks in terms of dexterity and reachable volume of operation.

In fact, in some embodiments of the present invention, the cable-driven parallel manipulator further comprises such an embarked manipulator (such as a robotic arm or any other multi degree-of-freedom manipulator) secured to the mobile platform. In this case, the control module is further configured to generate the instruction such that, upon moving the at least one movable device, any force and/or moment (wrench) exerted by the embarked manipulator is counteracted, at least partially, but in all cases such that the corresponding wrench remains feasible; so, any wrench exerted by the embarked manipulator is counteracted by displacing the overall CoM to be within the predetermined region related to the embarked manipulator wrench.

In this case of the cable-driven parallel manipulator having a manipulator embarked on its mobile platform (such as the robotic arm), the use of the at least one movable device on-board the mobile platform, allows:
- The cable-driven parallel manipulator not to be necessarily oversized with respect to the embarked manipulator, and/or
- The postures and motions of the embarked manipulator not to be strongly restricted.

In embodiments comprising the embarked manipulator, which is usually controlled by a controller (usually encased in some sort of cabinet or box), the at least one movable device comprises such controller cabinet or part of it. Thereby, there is no need to add any additional element or mass in the cable-driven parallel manipulator platform: the controller of the embarked manipulator is made movable and made part of the at least one movable device.

The at least one movable device is controlled in function of actualized data sent by the control unit of the cable system related to the current mobile platform wrench and/or current cable tensions. This data link existing between the control module of the movable device and the control unit of the cable system (which can be wireless) is important to ensure the consistency of, on the one hand, the motions of mobile parts of the at least one movable device and, on the other hand, the evolution in time of the mobile platform wrench and/or cable tensions.

Data transferred through this data link (which can also be synchronized) can be (but are not limited to) the position of the at least one movable device, the orientation of the cables with respect to the mobile platform, the force value and direction generated by each cable on the mobile platform, or an estimation of the wrench applied on the mobile platform. In another embodiment, data input from a set of sensors, such as (but not limited to) accelerometers, force sensors, are used to estimate the wrench at the mobile platform.

This synchronized data link allows the actual motion of the overall system to be close to the desired motion, the latter being planned so as to ensure the feasibility of the platform wrench. An example of planning consists in keeping the sum of the external wrench and the gravity wrench corresponding to the desired motion as far away as possible from the borders of the feasible wrench set, which corresponds to the most resilient situation against unplanned wrenches.

Depending on the application of the cable-driven parallel manipulator, and its foreseen movements, the at least one movable device can be differently moved. Each of these possible motion combinations can be advantageous according to the actual implementation of the present invention:
The at least one movable device preferably has at least one degree of freedom.

The at least one movable device may be movable along three mutually orthogonal directions; or along two directions and also rotatable at least around one direction; or along one direction and also rotatable around two directions; or movable along one translation direction and also rotatable around one rotation direction, the translation and rotation directions being orthogonal; or rotatable around two orthogonal directions. All these arrangements allow a positioning along three translational directions of space of a counterweight device, placed at the tip of the movable device, possibly with some coupling; the three translational directions, or the spherical coordinates in the case of the two orthogonal rotations, allowing to generate a displacement of the center of mass of all of the mobile platform, the at least one movable device and the load.

The at least one movable device can comprise one or more tanks mounted or placed on the mobile platform, and means for pumping liquid in such tank(s); in this embodiment, the control module generates an instruction to pump liquid in one or more of the tanks, so as to displace the overall CoM in at least one direction.

In some embodiments the mobile platform remains substantially vertical, and the at least one movable device may be movable along two horizontal orthogonal directions; or along one horizontal direction and also rotatable around one vertical direction. This arrangement takes the advantage of the gravity force being always vertical; therefore, any translational movement of the at least one movable device along a vertical direction is not useful and can be discarded in this particular embodiment.

In some embodiments the mobile platform is tilted around substantially only one of the originally horizontal axes of its own reference frame, and the at least one movable device may be movable along one horizontal direction normal to the originally horizontal axis of tilting, or rotatable around a revolution axis parallel to the originally horizontal axis of tilting of the movable platform. This specific arrangement can deal with any moment generated by gravity on a load attached to the mobile platform at a vertical distance from the geometric center of the platform because of the tilting.

Movement of the at least one movable device along the surface of a sphere may actually be enough for specific cases (off-centered load picking, for instance, with tilting of the platform implied).

If a manipulator is placed on-board the mobile platform of the cable-driven parallel manipulator, some of the previously mentioned degrees of freedom of the at least one movable device can be shared with the degrees of freedom of the on-board manipulator, leaving at least one own degree of freedom for the at least one movable device. In the specific situation of the unbalance being due to the movements or the position of the links of the embarked manipulators, the unbalance is mostly related to the degrees of freedom of the embarked manipulator. Sharing the degrees of freedom between the manipulator and the at least one movable device reduces the number of degrees of freedom to build in the whole system while keeping the capability of the system to balance the wrenches applied by the on-board manipulator on the mobile platform of the cable-driven parallel manipulator.

Another aspect of the invention relates to a method for stabilizing a load of a cable-driven parallel manipulator, the cable-driven manipulator comprising a mobile platform connected to a cable system whereto the load is attachable and a movable device mounted on the mobile platform; the method comprising:
- computing an overall center of mass of the cable-driven parallel manipulator as the center of mass all of: the mobile platform, the at least one movable device and the load; and
- generating an instruction to move the movable device for displacing the overall center of mass to be within a predetermined region.

The predetermined region is a stability region computed as the CoM feasible region, which comprises a set of locations of the overall center of mass which corresponds to feasible wrenches.

The method preferably further comprises:
- computing external wrenches and gravity wrenches exerted on the mobile platform;
- generating an instruction to move the at least one movable device for displacing the overall CoM so that the overall center of mass stays inside the predetermined region (which preferably is the CoM feasible region) related to the computed external wrenches and gravity wrenches.

As previously explained, the control of the at least one movable device mounted on the mobile platform increases the usable workspace and the load capabilities of the manipulator.

The method preferably comprises embarking a manipulator on-board the mobile platform of the cable-driven parallel manipulator. In this case, the instruction to move the at least one movable device also counteracts any force and/or moments exerted by the embarked manipulator.

In some embodiments, the method further comprises establishing a data link between a control unit of the cable system and a control module of the at least one movable device so that movements/ operations of the cable system and of the at least one movable device are shared (preferably synchronized) to prevent any cable of the cable system from being slack or from having a tension larger than a prescribed maximum admissible tension.

If an embarked manipulator is included, synchronization with the movements/ operations of the embarked manipulator is also comprised.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 is a schematic perspective view of a cable-driven parallel manipulator with a conventional robotic arm placed on-board the mobile platform.
Figure 2 is a schematic perspective view of a cable-driven parallel manipulator in accordance with an exemplary embodiment of the present invention.
Figure 3 is a schematic perspective view of a cable-driven parallel manipulator in accordance with another exemplary embodiment of the present invention.
Figure 4 is a schematic representation in the Mx-My moments plane, showing a graph which coordinates are moments around X and Y, showing how the cable-driven parallel manipulator can handle external wrenches beyond its achievable wrench region. It pictures the way the CoM feasible region is calculated from the external and gravity wrenches.

### DESCRIPTION OF A WAY OF CARRYING OUT THE INVENTION

The following description is not to be taken in a limiting sense but is given solely for the purpose of describing the broad principles of the invention. Embodiments of the invention will be now described by way of examples, with reference to the above-mentioned drawings showing elements and results according to the invention.

As previously indicated, Figure 1 shows a cable-driven parallel manipulator 1 with a conventional robotic arm 2 mounted on its mobile platform 3; the mobile platform is sustained by a set of cables 4, operated by corresponding winches (not shown in the Figure).

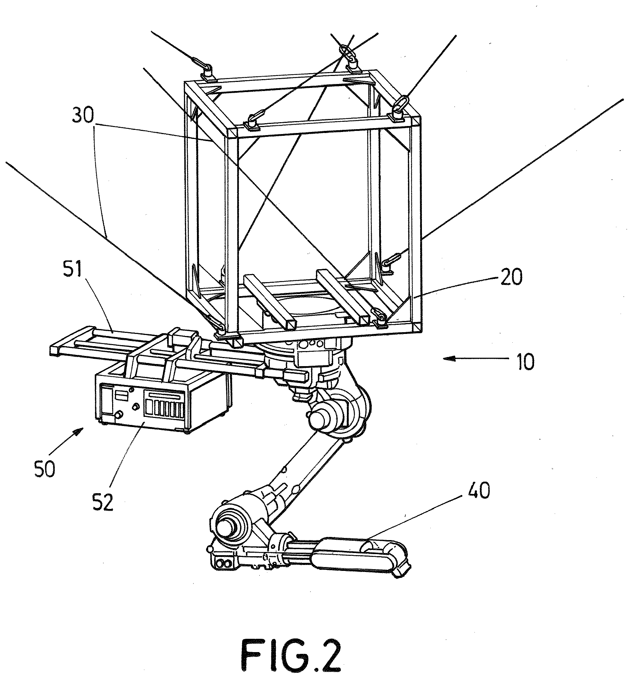

Figure 2 shows a first implementation of a cable-driven parallel manipulator 10 having a mobile platform 20 connected to a plurality of cables 30. A robotic arm 40 with six degrees of freedom is bolted downwards below the mobile platform 20 of the cable-driven parallel manipulator.

As shown in Figure 2, the cable-driven manipulator further comprises a balancing mechanism 50 (movable device). The mobile platform 20 of the cable-driven manipulator 10 is used in a substantially constant orientation, which means that the capabilities of the cable-driven parallel manipulator to generate rotations is only used to withstand moments. As a result, the balancing mechanism 50 only needs two degrees of freedom to prevent any cable of the cable system from being slack or from having a tension larger than a prescribed maximum admissible tension.

Following the usual construction of robotic arms in the market, the robotic arm 40 is featured with the following six revolute joints: firstly, a "vertical" revolute joint; then, two "horizontal" revolute joints with parallel rotation axes and separated by a first link; fourth, a revolute joint in line with the second link, and finally two revolute joints; the three last revolute joint axes intersect at the robot wrist center point.

Because of this construction, the center of mass of the robotic arm is situated on, or close to, a plane normal to the second and third revolute joint axes. This plane rotates with the first joint. As a result, full, or efficient, balancing of the position of the center of mass of the robotic arm can be achieved by moving the center of mass of the movable device 50 in this same plane. In the present embodiment, this is achieved with the movable device 50 being movable on the axis that is the intersection of this same plane and a horizontal plane; this movement is materialized here by a set of sliders 51 that are fixed to the portion of the robotic arm 40 located between the first and the second joints, and a lead screw and nut mechanism driven by a motor for actuation. The first joint of the robotic arm can therefore be considered as one of the joints of the movable device 50. The movable device 50 is moved in unison with the robotic arm 40 to keep it balanced at all times, and can be implemented as a complementary system to the robotic arm.

In this particular implementation, the movable device 50 includes a movable mass 52, which is the electrical equipment used for driving and controlling the robotic arm 40, which can be composed by but not limited to the controller cubicle containing the electronic drives of the various motors. Electrical wiring from the mobile platform to the cubicle and thereafter from the cubicle to the motors of the movable device and the robotic arm is achieved using cable carrier chains.

Once the robotic arm is operating over a specific load, its center of mass is typically situated at a fixed distance from the wrist point, and it cannot be completely balanced by the movable device 50. This is not considered critical as the unbalance provided by the load off the plane of the robotic arm or the dynamics of the wrist axes is limited by the moment capability of said wrist axes of the robotic arm, which is typically lower than the moment capability of the cable-driven parallel manipulator.

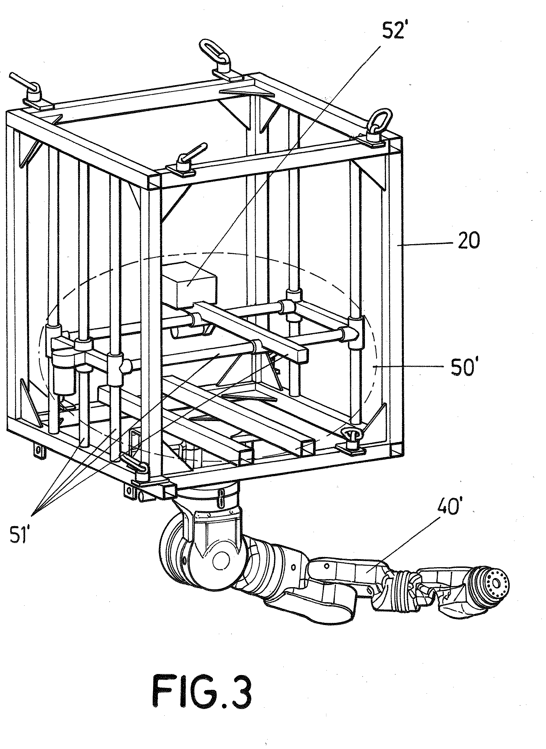

Figure 3 shows a second implementation of the invention. In this case, the mobile platform 20 is equipped with a robotic arm 40' having seven degrees of freedom. The controller of the robot arm is integrated inside the base of the arm. The cable-driven manipulator can be used in any rotational position, and it is thus provided with a movable device 50' with three degrees of freedom to fully counteract the forces and moments generated by the robotic arm 40'. In this case, the movable device 50' is built using three sliders 51' oriented in mutually orthogonal directions and actuated by the corresponding electric motors. The terminal movable mass 52' of the movable device 50' can therefore be positioned in any position to counteract the moment from the robotic arm 40'.

As previously explained, for a given pose of a specific cable-driven parallel manipulator, the feasible wrench set is the set of mobile platform wrenches (forces and moments) which the cable system can counteract, such that the tension in each cable of the cable system remains within prescribed admissible bounds.

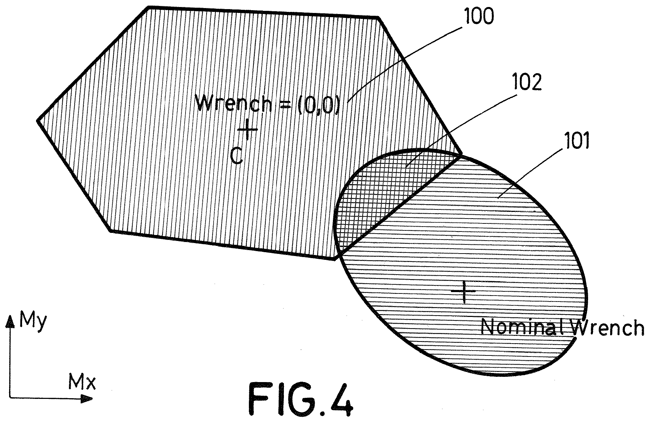

The feasible wrench set 100 of the cable-driven parallel manipulator is represented in Figure 4 in the Mx-My moment plane, i.e., the plane whose x-axis and y-axis represent the moments around the horizontal axes X and Y (Mx and My), respectively. This 2-dimensional planar representation is a simplification of the actual feasible wrench set which is a 6-dimensional object, this simplification aiming at easing its representation. Besides, moments around X and Y (horizontal axes) can be generated by a horizontal displacement of the overall CoM of the at least one movable device. The point C of the feasible wrench shown in Fig. 4 is set as the point where the moments Mx and My are equal to 0. Region 100 also corresponds to the feasible wrench set of the equivalent state of the art cable-driven parallel manipulator. No wrench outside region 100 can be balanced by said manipulator by just acting on the forces in the cables, as it is done in existing cable-driven parallel manipulators.

A nominal wrench is introduced: it is the wrench that the cable tensions have to counteract when the at least one movable device is at a neutral position, meaning that the at least one movable device does not generate any moment around X and Y. The nominal wrench can be the external wrench as defined above, or an off-centered load, or the actions of an on-board robotic arm (such as but not limited to the moments and forces due to a posture in quasi-static case), or the sum of those actions. Region 101 is the set of wrenches equal to the sum of the nominal wrench and the possible wrenches generated by the at least one movable device in all of the possible coordinate sets for the overall CoM. Each point in region 101 is therefore linked to a coordinate set of the at least one movable device.

Region 102 is introduced: it is the intersection between region 100 and 101. Being part of 100, any wrench within this region belongs to the feasible wrench set. On the other hand, being part of region 101, region 102 may be associated with a region of space for the overall CoM. This region of space associated with region 102 is the CoM feasible region. As a result, with the overall CoM inside this CoM feasible region, there exist a set of admissible cable tensions for which the sum of the wrench from the cables, the wrench from the action of gravity and the nominal wrench equals to zero. If there is no intersection between region 100 and 101, it means that the nominal wrench considered cannot be balanced by the proposed cable-driven parallel manipulator.

Figure 4 therefore shows that it is possible with the disclosed invention to increase the load, in particular with respect to moments around X and Y using gravity. It is also possible to increase the load in the other wrench directions (Fx, Fy, Fz, Tz) using the dynamics of the movable device. Therefore, the capabilities of the cable-driven parallel manipulator are increased, since wrenches beyond the original feasible wrench set (equivalent to the feasible wrench set of a state of the art cable-driven parallel manipulator) can be balanced with this method.

In fact, the displacement of the overall CoM by the means of the balancing mechanism creates a shift in the 6D space of the wrench components, said shift direction and amplitude being a function of the actual displacement of the overall CoM by means of the at least one movable device: for a calculated wrench applied at the mobile platform, a region for positioning of the center of mass of all of the mobile platform, the at least one movable device and the load can be determined. The ability of moving the overall center of mass therefore allows wrenches that were not originally in the feasible wrench set to be counterbalanced. Said wrenches could be originated by:
- The picking of a load whose center of mass is not vertically aligned with the geometric center point, generating a moment,
- The tilting of a load around horizontal axis whose center of mass is situated at rest at a vertical distance from the geometric center point,
- The forces generated by devices on-board the movable platform, such as a manipulation device for holding the load,
- External forces and moments due to interaction between the movable platform or a manipulation device secured on the movable platform and the environment.

The two embodiments shown in Figures 2 and 3 reflect a cable-driven parallel manipulator with an embarked manipulator 40, 40'. However, when the cable-driven parallel manipulator is not equipped with on-board devices that provide additional local dexterity, the cable tensions still depend highly on the location of the overall CoM of the set consisting of the mobile platform and its load. In various situations, the load may be off-centered or its mass distribution may not be uniform. Therefore, to be able to handle a variety of loads with cable tensions remaining into admissible bounds, especially in contexts where the load cannot be placed appropriately with respect to the mobile platform, the position of the overall CoM may have to be modified in order to keep the cable tensions into admissible bounds, which in the present invention is possible by means of the balancing mechanism 50, 50'.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Cable-driven parallel manipulator (10) comprising:
- a support structure;
- a cable system (30) mounted on the support structure; and
- a mobile platform (20) connected to the cable system (30) whereto a load is attachable;
- the cable system being controlled by a control unit to position and orientate the mobile platform (20) and to apply forces and moments on the mobile platform (20); and
- at least one movable device (50, 51, 52, 50', 51', 52') mounted on the mobile platform (20); **characterised in that** the cable-driven parallel manipulator further comprises :
- a control module configured to generate an instruction to move the movable device (50, 51, 52, 50', 51', 52') for displacing an overall center of mass of all of: the mobile platform (20), the at least one movable device (50, 51, 52, 50', 51', 52') and the load, such that, upon moving the movable device (50, 51, 52, 50', 51', 52'), the overall center of mass is within a predetermined region (101),
wherein the predetermined region (101) is a stability region computed as the center of mass, CoM, feasible region, which comprises a set of locations of the overall center of mass which corresponds to feasible wrenches for which the tension of the cables of the cable system (30) remains within admissible minimum and maximum tensions.

2. Cable-driven parallel manipulator (10) according to claim 1, wherein the mobile platform further comprises an embarked manipulator (40, 40') secured to the mobile platform (20).

3. Cable-driven parallel manipulator (10) according to claim 2, wherein the control module is configured to generate the instruction such that, upon moving the movable device (50, 51, 52, 50', 51', 52'), any force and/or moment exerted by the embarked manipulator (40, 40') is counteracted by displacing the overall center of mass to be within the predetermined region (101).

4. Cable-driven parallel manipulator (10) according to any of claims 1-3, further comprising a data link between the control unit of the cable system (30) and the control module of the movable device (50, 51, 52, 50', 51', 52'), the control module of the at least one movable device being configured to take actualized data from the control unit of the cable system as an input.

5. Cable-driven parallel manipulator (10) according to any of claims 2-4, wherein the embarked manipulator (40, 40') has shared degrees of freedom with the at least one movable device.

6. Cable-driven parallel manipulator (10) according to any of claims 1-5, wherein the at least one movable device is movable along three mutually orthogonal directions; or along two directions and also rotatable at least around one direction; or along one translation direction and also rotatable around two directions; or along one translation direction and also rotatable around one rotation direction, the translation and rotation directions being orthogonal.

7. Cable-driven parallel manipulator (10) according to any of claims 1-6, wherein the at least one movable device (50, 51, 52, 50', 51', 52') comprises one or more tanks in which a fluid can be pumped in and out.

8. Cable-driven parallel manipulator (10) according to any of claims 2-7, wherein the movable device (50, 51, 52) comprises a controller cabinet (52) of the embarked manipulator (40).

9. Method for stabilizing a load of a cable-driven parallel manipulator (10), the cable-driven parallel manipulator comprising a mobile platform (20) connected to a cable system (30) whereto the load is attachable, the cable-driven parallel manipulator further comprising a movable device (50, 51, 52, 50', 51', 52') mounted on the mobile platform (20);
the method comprising:
- computing an overall center of mass of the cable-driven parallel manipulator as the center of mass all of: the mobile platform, the at least one movable device and the load;
- generating an instruction to move the movable device (50, 51, 52, 50', 51', 52') for displacing the overall center of mass to be within a predetermined region (101),
wherein the predetermined region is a stability region computed as the center of mass, CoM, feasible region, which comprises a set of locations of the overall center of mass which corresponds to feasible wrenches for which the tension of the cables of the cable system (30) remains within admissible minimum and maximum tensions.

10. Method according to claim 9, preferably further comprises:
- computing external wrenches and gravity wrenches exerted on the mobile platform (20);
- generating an instruction to move the at least one movable device for displacing the overall center of mass such that is stays inside the predetermined region (101) related to the computed external wrenches and gravity wrenches.

11. The method of any of claims 9-10, in which the cable-driven parallel manipulator comprises an embarked manipulator (40, 40') secured to the mobile platform (20), wherein the step of generating an instruction to move the movable device comprises counteracting any force and/or moment exerted by the embarked manipulator (40').

12. The method of any of claims 9-11, in which the step of generating an instruction to move the movable device comprises inputting into a control module of the movable device updated data provided by a control unit of the cable system to compute the predetermined region.

13. The method of claim 12 when dependent on claim 11, which further comprises inputting into a control module of the movable device updated data provided by the embarked manipulator.

14. The method of claim 11, in which the step of generating an instruction to move the movable device comprises previously receiving data from sensors measuring any unbalance in the cable-driven parallel manipulator so as to compute the predetermined region.

## Patentansprüche

1. Seilgetriebener Parallelmanipulator (10) umfassend:
- eine Tragkonstruktion;
- ein Seilsystem (30), das an der Tragkonstruktion montiert ist; und
- eine mit dem Seilsystem (30) verbundene mobile Plattform (20), an der eine Last befestigt werden kann;
- wobei das Seilsystem durch eine Steuereinheit gesteuert wird, um die mobile Plattform (20) zu positionieren und auszurichten und um Kräfte und Momente auf die mobile Plattform (20) aufzubringen; und
- mindestens eine bewegliche Vorrichtung (50, 51, 52, 50', 51', 52'), die an der mobilen Plattform (20) montiert ist;
**dadurch gekennzeichnet, dass** der seilgetriebene Parallelmanipulator ferner Folgendes umfasst:
- ein Steuermodul, das dazu ausgebildet ist, einen Befehl zu erzeugen, um die bewegliche Vorrichtung (50, 51, 52, 50', 51', 52') zu bewegen, um den Massenmittelpunkt insgesamt von allen folgenden Elementen zu verschieben: der mobilen Plattform (20), der mindestens einen beweglichen Vorrichtung (50, 51, 52, 50', 51', 52') und der Last, sodass, wenn die bewegliche Vorrichtung (50, 51, 52, 50', 51', 52') bewegt wird, der Massenmittelpunkt insgesamt innerhalb eines vorbestimmten Bereichs (101) liegt,
wobei der vorbestimmte Bereich (101) ein als machbarer Bereich für den Massenmittelpunkt (CoM) berechneter Stabilitätsbereich ist, der einen Satz von Orten umfasst, deren Massenmittelpunkt insgesamt machbaren Anziehmomenten entspricht, bei denen die Spannung der Seile des Seilsystems (30) innerhalb zulässiger minimaler und maximaler Spannungen bleibt.

2. Seilgetriebener Parallelmanipulator (10) nach Anspruch 1, wobei die mobile Plattform ferner einen angebundenen Manipulator (40, 40') umfasst, der an der mobilen Plattform (20) befestigt ist.

3. Seilgetriebener Parallelmanipulator (10) nach Anspruch 2, wobei das Steuermodul dazu ausgebildet ist, den Befehl so zu erzeugen, dass wenn die bewegliche Vorrichtung (50, 51, 52, 50', 51', 52') bewegt wird, jeglicher auf den angebundenen Manipulator (40, 40') ausgeübten Kraft und/oder jeglichem auf diesen ausgeübten Moment entgegengewirkt wird, indem der Massenmittelpunkt insgesamt so verschoben wird, dass er innerhalb des vorbestimmten Bereichs (101) liegt.

4. Seilgetriebener Parallelmanipulator (10) nach einem der Ansprüche 1-3, ferner umfassend eine Datenverbindung zwischen der Steuereinheit des Seilsystems (30) und dem Steuermodul der beweglichen Vorrichtung (50, 51, 52, 50', 51', 52`), wobei das Steuermodul der mindestens einen beweglichen Vorrichtung dazu ausgebildet ist, aktualisierte Daten aus der Steuereinheit des Seilsystems als Eingang zu entnehmen.

5. Seilgetriebener Parallelmanipulator (10) nach einem der Ansprüche 2-4, wobei der eingefahrene Manipulator (40, 40') gemeinsame Freiheitsgrade mit der mindestens einen beweglichen Vorrichtung hat.

6. Seilgetriebener Parallelmanipulator (10) nach einem der Ansprüche 1-5, wobei die mindestens eine bewegliche Vorrichtung entlang von drei zueinander orthogonalen Richtungen bewegbar ist; oder entlang von zwei Richtungen bewegbar ist und außerdem um mindestens eine Richtung drehbar ist; oder entlang einer Translationsrichtung bewegbar ist und außerdem um zwei Richtungen drehbar ist; oder entlang einer Translationsrichtung bewegbar ist und außerdem um eine Drehrichtung drehbar ist, wobei die Translationsrichtung und die Drehrichtung orthogonal sind.

7. Seilgetriebener Parallelmanipulator (10) nach einem der Ansprüche 1-6, wobei die mindestens eine bewegliche Vorrichtung (50, 51, 52, 50', 51', 52') einen oder mehrere Behälter umfasst, in die und aus denen eine Flüssigkeit gepumpt werden kann.

8. Seilgetriebener Parallelmanipulator (10) nach einem der Ansprüche 2-7, wobei die bewegliche Vorrichtung (50, 51, 52) einen Steuerungsschrank (52) des angebundenen Manipulators (40) umfasst.

9. Verfahren zum Stabilisieren einer Last eines seilgetriebenen Parallelmanipulators (10), wobei der seilgetriebene Parallelmanipulator eine mit einem Seilsystem (30) verbundene mobile Plattform (20) umfasst, an der die Last befestigt werden kann, wobei der seilgetriebene Parallelmanipulator ferner eine bewegliche Vorrichtung (50, 51, 52, 50', 51', 52') umfasst, die an der mobilen Plattform (20) montiert ist;
wobei das Verfahren die folgenden Schritte umfasst:
- Berechnen eines Gesamt-Massenmittelpunkts des seilgetriebenen Parallelmanipulators als Massenmittelpunkt von allen folgenden Elementen: der mobilen Plattform, der mindestens einen beweglichen Vorrichtung und der Last;
- Erzeugen eines Befehls, um die bewegliche Vorrichtung (50, 51, 52, 50', 51', 52') zu bewegen, um den Massenmittelpunkt insgesamt so zu verschieben, dass er innerhalb eines vorbestimmten Bereichs (101) liegt,
wobei der vorbestimmte Bereich ein als machbarer Bereich für den Massenmittelpunkt (CoM) berechneter Stabilitätsbereich ist, der einen Satz von Orten umfasst, deren Massenmittelpunkt insgesamt machbaren Anziehmomenten entspricht, bei denen die Spannung der Seile des Seilsystems (30) innerhalb zulässiger minimaler und maximaler Spannungen bleibt.

10. Verfahren nach Anspruch 9, das vorzugsweise ferner die folgenden Schritte umfasst:
- Berechnen externer Anziehmomente und schwerkraftbedingter Anziehmomente, die auf die mobile Plattform (20) ausgeübt werden;
- Erzeugen eines Befehls, um die mindestens eine bewegliche Vorrichtung zu bewegen, um den Massenmittelpunkt insgesamt so zu verschieben, dass er in Bezug auf die berechneten externen Anziehmomente und schwerkraftbedingten Anziehmomente innerhalb des vorbestimmten Bereichs (101) bleibt.

11. Verfahren nach einem der Ansprüche 9-10, bei dem der seilgetriebene Parallelmanipulator einen angebundenen Manipulator (40, 40') umfasst, der an der mobilen Plattform (20) befestigt ist, wobei der Schritt des Erzeugens eines Befehls zum Bewegen der beweglichen Vorrichtung darin besteht, jeglicher Kraft und/oder jeglichem Moment entgegenzuwirken, die/das von dem angebundenen Manipulator (40`) ausgeübt wird.

12. Verfahren nach einem der Ansprüche 9-11, bei dem der Schritt des Erzeugens eines Befehls zum Bewegen der beweglichen Vorrichtung die Eingabe aktualisierter, von einer Steuereinheit des Seilsystems gelieferter Daten in ein Steuermodul der beweglichen Vorrichtung umfasst, um den vorbestimmten Bereich zu berechnen.

13. Verfahren nach Anspruch 12, wenn dieser abhängig ist von Anspruch 11, bei dem ferner von dem angebundenen Manipulator gelieferte aktualisierte Daten in ein Steuermodul der beweglichen Vorrichtung eingegeben werden.

14. Verfahren nach Anspruch 11, bei dem der Schritt des Erzeugens eines Befehls zum Bewegen der beweglichen Vorrichtung zuvor den Empfang von Daten von Sensoren umfasst, die jegliches Ungleichgewicht in dem seilgetriebenen Parallelmanipulator messen, um den vorbestimmten Bereich zu berechnen.

## Revendications

1. Manipulateur parallèle entraîné par câble (10) comprenant :
- une structure de support ;
- un système de câbles (30) monté sur la structure de support ; et
- une plate-forme mobile (20) connectée au système de câbles (30), à laquelle une charge peut être attachée ;
- le système de câbles étant commandé par une unité de commande pour positionner et orienter la plate-forme mobile (20) et pour appliquer des forces et des moments sur la plate-forme mobile (20) ; et
- au moins un dispositif mobile (50, 51, 52, 50', 51', 52') monté sur la plate-forme mobile (20) ; **caractérisé en ce que** le manipulateur parallèle entraîné par câble comprend en outre :
- un module de commande configuré pour générer une instruction pour déplacer le dispositif mobile (50, 51, 52, 50', 51', 52') pour déplacer un centre de masse global de tous les éléments suivants : la plate-forme mobile (20), l'au moins un dispositif mobile (50, 51, 52, 50', 51', 52') et la charge, de sorte que lors du déplacement du dispositif mobile (50, 51, 52, 50', 51', 52'), le centre de masse global se trouve dans une région prédéterminée (101),
dans lequel la région prédéterminée (101) est une région de stabilité calculée comme région acceptable de centre de masse, CoM, qui comprend un ensemble d'emplacements du centre de masse global, qui correspond à des mouvements acceptables pour lesquels la tension des câbles du système de câbles (30) reste entre des tensions minimale et maximale admissibles.

2. Manipulateur parallèle entraîné par câble (10) selon la revendication 1, dans lequel la plate-forme mobile comprend en outre un manipulateur embarqué (40, 40') fixé à la plate-forme mobile (20).

3. Manipulateur parallèle entraîné par câble (10) selon la revendication 2, dans lequel le module de commande est configuré pour générer l'instruction de sorte que lors du déplacement du dispositif mobile (50, 51, 52, 50', 51', 52'), toute force et/ou tout moment exercé par le manipulateur embarqué (40, 40') est contrecarré en décalant le centre de masse global pour qu'il se trouve dans la région prédéterminée (101).

4. Manipulateur parallèle entraîné par câble (10) selon l'une quelconque des revendications 1 à 3, comprenant en outre une liaison de données entre l'unité de commande du système de câbles (30) et le module de commande du dispositif mobile (50, 51, 52, 50', 51', 52'), le module de commande de l'au moins un dispositif mobile étant configuré pour prendre en entrée des données actualisées provenant de l'unité de commande du système de câbles.

5. Manipulateur parallèle entraîné par câble (10) selon l'une quelconque des revendications 2 à 4, dans lequel le manipulateur embarqué (40, 40') a des degrés de liberté partagés avec l'au moins un dispositif mobile.

6. Manipulateur parallèle entraîné par câble (10) selon l'une quelconque des revendications 1 à 5, dans lequel l'au moins un dispositif mobile est mobile le long de trois directions mutuellement orthogonales ; ou le long de deux directions en étant également rotatif autour d'au moins une direction ; ou le long d'une direction de translation en étant également rotatif autour de deux directions ; ou le long d'une direction de translation en étant également rotatif autour d'une direction de rotation, les directions de translation et de rotation étant orthogonales.

7. Manipulateur parallèle entraîné par câble (10) selon l'une quelconque des revendications 1 à 6, dans lequel l'au moins un dispositif mobile (50, 51, 52, 50', 51', 52') comprend un ou plusieurs réservoirs dans lesquels un fluide peut être pompé à l'intérieur et à l'extérieur.

8. Manipulateur parallèle entraîné par câble (10) selon l'une quelconque des revendications 2 à 7, dans lequel le dispositif mobile (50, 51, 52) comprend une armoire de commande (52) du manipulateur embarqué (40).

9. Méthode de stabilisation d'une charge d'un manipulateur parallèle entraîné par câble (10), le manipulateur parallèle entraîné par câble comprenant une plate-forme mobile (20) connectée à un système de câbles (30), à laquelle la charge peut être attachée, le manipulateur parallèle entraîné par câble comprenant en outre un dispositif mobile (50, 51, 52, 50', 51', 52') monté sur la plate-forme mobile (20) ; la méthode comprenant :
- le calcul d'un centre de masse global du manipulateur parallèle entraîné par câble comme centre de masse de tous les éléments suivants : la plate-forme mobile, l'au moins un dispositif mobile et la charge ;
- la génération d'une instruction pour déplacer le dispositif mobile (50, 51, 52, 50', 51', 52') pour déplacer le centre de masse global pour qu'il se trouve dans une région prédéterminée (101),
dans laquelle la région prédéterminée est une région de stabilité calculée comme région acceptable de centre de masse, CoM, qui comprend un ensemble d'emplacements du centre de masse global, qui correspond à des mouvements acceptables pour lesquels la tension des câbles du système de câbles (30) reste entre des tensions minimale et maximale admissibles.

10. Méthode selon la revendication 9, comprenant de préférence en outre :
- le calcul de mouvements externes et de mouvements de gravité exercés sur la plate-forme mobile (20) ;
- la génération d'une instruction pour déplacer l'au moins un dispositif mobile pour décaler le centre de masse global de sorte qu'il reste à l'intérieur de la région prédéterminée (101) liée aux mouvements externes et aux mouvements de gravité calculés.

11. Méthode selon l'une quelconque des revendications 9 à 10, dans laquelle le manipulateur parallèle entraîné par câble comprend un manipulateur embarqué (40, 40') fixé à la plate-forme mobile (20), dans laquelle l'étape de génération d'une instruction pour déplacer le dispositif mobile comprend le fait de contrecarrer toute force et/ou tout moment exercé par le manipulateur embarqué (40').

12. Méthode selon l'une quelconque des revendications 9 à 11, dans laquelle l'étape de génération d'une instruction pour déplacer le dispositif mobile comprend l'entrée de données mises à jour, fournies par une unité de commande du système de câbles, dans un module de commande du dispositif mobile pour calculer la région prédéterminée.

13. Méthode selon la revendication 12 lorsqu'elle dépend de la revendication 11, qui comprend en outre l'entrée de données mises à jour, fournies par le manipulateur embarqué, dans un module de commande du dispositif mobile.

14. Méthode selon la revendication 11, dans laquelle l'étape de génération d'une instruction pour déplacer le dispositif mobile comprend la réception préalable de données provenant de capteurs mesurant tout déséquilibre dans le manipulateur parallèle entraîné par câble de manière à calculer la région prédéterminée.
